# EUROPEAN PATENT SPECIFICATION

(11) **EP 0 454 866 B1**
(45) Date of publication and mention of the grant of the patent: **28.02.1996**
(21) Application number: 90916812.2
(22) Date of filing: 15.11.1990
(51) Int. Cl.: F16D 25/10

(54) **AUTOMATIC TRANSMISSION**
AUTOMATIKGETRIEBE
TRANSMISSION AUTOMATIQUE

(30) Priority: 15.11.1989 JP 294825/89
(43) Date of publication of application: 06.11.1991
(73) Proprietor: AISIN-AW KABUSHIKI KAISHA, Anjo-shi Aichi 444-11 (JP)
(72) Inventor: NISHIDA, Masaaki, Anjo-shi Aichi 446 (JP); HOSONO, Chihiro, Okazaki-shi Aichi 444-35 (JP); HAYAKAWA, Yoichi, Toyoake-shi Aichi 470-11 (JP)
(74) Representative: VOSSIUS & PARTNER
(86) International application number: PCT/JP90/01480
(87) International publication number: WO 91/07603

(56) References cited:
- GB-A- 966 355
- JP-A-58 170 925
- JP-A-62 141 344
- JP-A-62 233 543
- JP-A-63 289 358
- JP-B- 6 119 861
- US-A- 4 741 422

## Description

The present invention relates to an automatic transmission for an automobile.

In the prior art, an automatic transmission for an automobile has a plurality of planetary gear sets and frictional engagement components such as brakes or clutches connected with the individual components of the planetary gear sets, so that it can establish a plurality of gear stages by engaging the individual frictional engagement components selectively.

Moreover, each of the brakes and clutches is composed of a hydraulic servo and a plurality of discs to be engaged or released by the hydraulic servo. This hydraulic servo is composed of an annular cylinder and an annular piston made slidable in the annular cylinder, so that it can engage the discs by introducing the working oil into the cylinder chamber formed between the cylinder and piston and can release the discs by draining the working oil.

The aforementioned plural brakes and clutches are arranged in the axial direction within the transmission casing of the automatic transmission.

In the automatic transmission thus constructed, however, the individual brakes and clutches have to be engaged or released independently of one another, in case the gear stage of each range is to be selected, so that they have to be arranged independently of one another.

This arrangement has made it impossible to shorten the axial size of the automatic transmission.

GB-A-966 355 discloses an automatic transmission comprising an outer cylinder, an inner cylinder, first and second annular pistons, wherein the second piston acts onto a first set of clutches and the first piston acts onto a second set of clutches. The first piston acts onto the second set of clutches by a plurality of rods which have a small diameter and are conducted through the small grooves of the first set of clutches bordering on thin walls. The rods are connected to the first piston separately and act onto the second set of clutches separately.

JP-A-62-23 3543 discloses an automatic transmission wherein the axial movement of the first and second clutch are restricted by first and second snap rings. The second snap ring restricting the axial movement of the second clutch is fixed at an outer cylinder while, on the other hand, the first snap ring for restricting the axial movement of the first clutch is fixed at a first annular piston and not at the outer cylinder. Therefore, the engagement of the first clutch affects the engagement of the second clutch due to the fact that the first snap ring is fixed at the first annular piston. That is, the axial movement of the first clutch is transmitted to the first annular piston by the first snap ring. As a result, the second clutch is engaged. Accordingly, the first clutch cannot be engaged alone. The first clutch is only engaged if the second clutch is engaged as well.

An object of the present invention is to solve the aforementioned problems of the existing automatic transmission and to provide an automatic transmission which can have its axial size reduced. This object is solved with the features of the claims.

According to the invention two snap rings restricting the axial movement of a first and a second clutch are fixed on the outer cylinder. Therefore, the engagement of the first clutch has no effect on the engagement of the second clutch.

An automatic transmission as described comprises: an outer cylinder 108; an inner cylinder 104 fixed in said outer cylinder for forming a first annular cylinder chamber 109; a first annular piston 110 arranged slidably in said first annular cylinder chamber 109 for forming a second annular cylinder chamber 111 between itself and said inner cylinder 104; and a second annular piston 112 arranged slidably in said second annular cylinder chamber 111, so that said outer cylinder 108, said first annular piston 110 and said second annular piston 112 form together two hydraulic servos C₀ and C₃.

In said outer cylinder 108, there are arranged axially in tandem first and second multi-disc clutches C3 and C0 respectively which are engaged or released independently of each other, and the former C3 of which is engaged or released by said second annular piston 112 and

formed with a plurality of axial grooves 125 in its peripheral edge portion, and an apply tube 126 is extended between said first annular piston 110 and said second multi-disc clutch C0 to be engaged or released by said first annular piston 110 and is extended through said grooves 125.

Moreover, the second multi-disc clutch C0 to be engaged or released by said first annular piston 110 and the first multi-disc clutch C3 to be engaged or released by said second annular piston 112 are both engaged at one of the gear stages and either released at another gear stage.

The automatic transmission as described comprises: the outer cylinder 108; the inner cylinder 104 fixed in said outer cylinder 108 for forming the first annular cylinder chamber 109; the first annular piston 110 arranged slidably in said first annular cylinder chamber 109 for forming the second annular cylinder chamber 111 between itself and said inner cylinder 104; the second annular piston 112 arranged slidably in said second annular cylinder chamber 111, so that the outer cylinder 108, the first annular piston 110 and the second annular piston 112 form together the two hydraulic servos C₀ and C₃. As a result, the outer cylinder 108, a spring 114 and a spring retainer 113 can be shared to shorten the axial size. Said outer cylinder 108 is arranged axially in tandem with the two multi-disc clutches C0 and C3 which are to be engaged or released independently of each other, and the latter C3 of which is to be engaged or released by said second annular piston 112 and is formed with the plural axially extending grooves 125 in its peripheral edge portion, and the apply tube 126 extending between said first annular piston 110 and the second multi-disc clutch C0 to be engaged or released by said first annular piston 110 are extended through said grooves 125. As a result, no interference between the two clutches C0 and C3 is established when the other clutch C0 is to be released while the one C3 is being engaged.

The present invention will be described in detail in the following in connection with the embodiments thereof with reference to the accompanying drawings.

Fig. 1 is an enlarged section showing a second clutch C0 and a first clutch C3.

Fig. 2 is a skeleton diagram showing an automatic transmission of the present invention.

Fig. 3 is a section showing the automatic transmission of the present invention.

Figs. 4(a) and 4(b) diagrams showing the hydraulic control system of the automatic transmission of the present invention.

Fig. 5 is a table enumerating the operations of the automatic transmission of the present invention.

Fig. 6 is a section showing the state in which apply tubes are arranged.

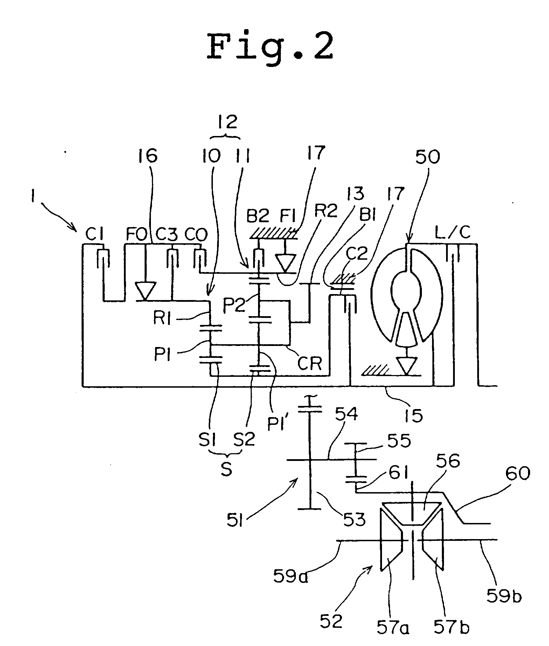

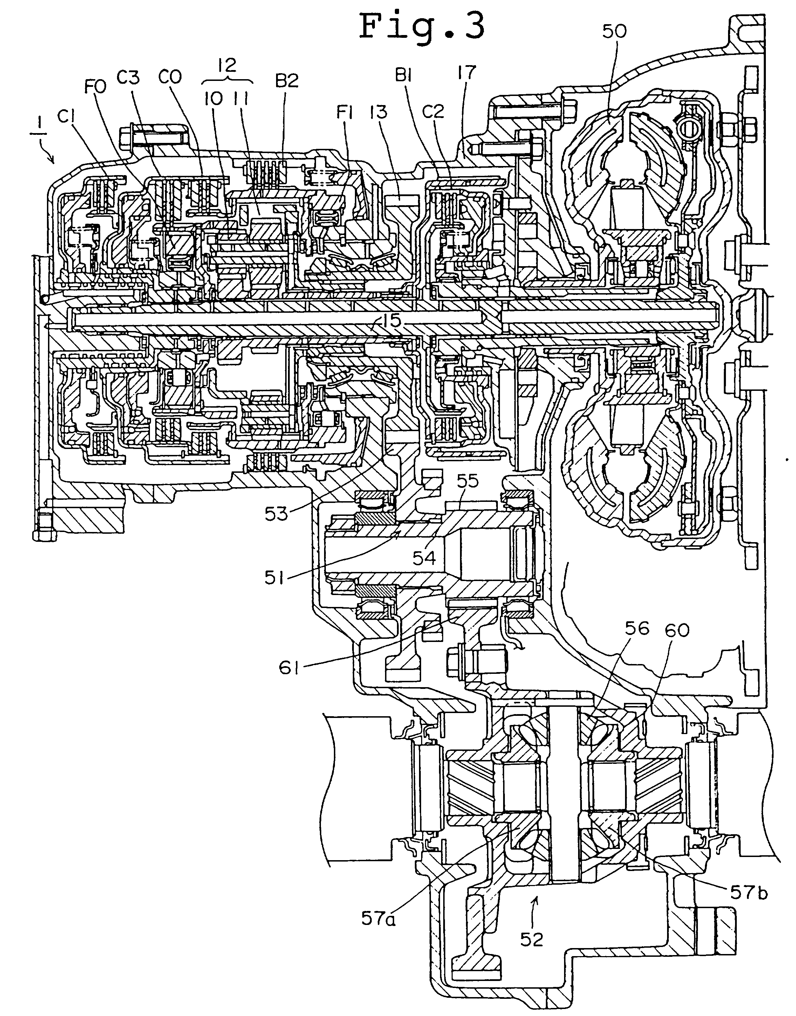

Fig. 2 is a skeleton diagram showing the automatic transmission of the present invention, and Fig. 3 is a section showing the automatic transmission of the present invention. A four-speed automatic transmission A according to the present invention is constructed of a torque converter 50 having a lockup clutch L/C, a four-speed shift gear mechanism 1, a reduction mechanism 51 and a differential mechanism 52.

The four-speed shift gear mechanism 1 is equipped with a planetary gear unit 12 which is made by coupling a single planetary gear 10 and a dual planetary gear 11. This gear unit 12 has its sun gears S1 and S2 integrated into a sun gear S. Moreover, pinions P1 and P1' meshing with the sun gears S1 and S2 share a carrier CR inbetween. This carrier CR is shared by said pinions and a pinion P2 meshing with a ring gear (as will be referred to as the "large ring gear") R2 of the dual planetary gear 11.

Moreover, an input shaft 15 extending from the output member of the torque converter 50 is connected through a third clutch C1 to a connecting member 16 and through a fourth clutch C2 to the sun gear S. Between the connecting member 16 and the ring gear (as will be referred to as the "small ring gear") R1 of the single planetary gear 10, there are interposed the first clutch C3 and a second one-way clutch F0. A second clutch C0 is interposed between the connecting-member 16 and the large ring gear R2. On the other hand, the aforementioned sun gear S can be stopped by a first brake B1 which is made of a band brake. Between the large ring gar R2 and a casing 17, there are interposed a second brake B2 and a first one-way clutch F1. Moreover, the carrier CR is connected to an output gear 13 which is positioned generally at the center of the shift gear mechanism 1.

On the other hand, the reduction mechanism 51 is equipped with a counter shaft 54 which is rotatably supported by the casing 17. On the counter shaft 54, there are fixed a large gear 53 meshing with the aforementioned output gear 13 at all times, and a small gear 55. On the other hand, the differential mechanism 52 is composed of a differential pinion 56 and lefthand and righthand pinions 57a and 57b meshing with each other. These pinions 57a and 57b are fixed on lefthand and righthand front axles 59a and 59b, respectively. The differential pinion 56 is supported by a differential carrier 60 which in turn is rotatably supported by the casing 17. On the differential carrier 60, there is fixed a ring gear 61 which meshing with the aforementioned small gear 55 at all times.

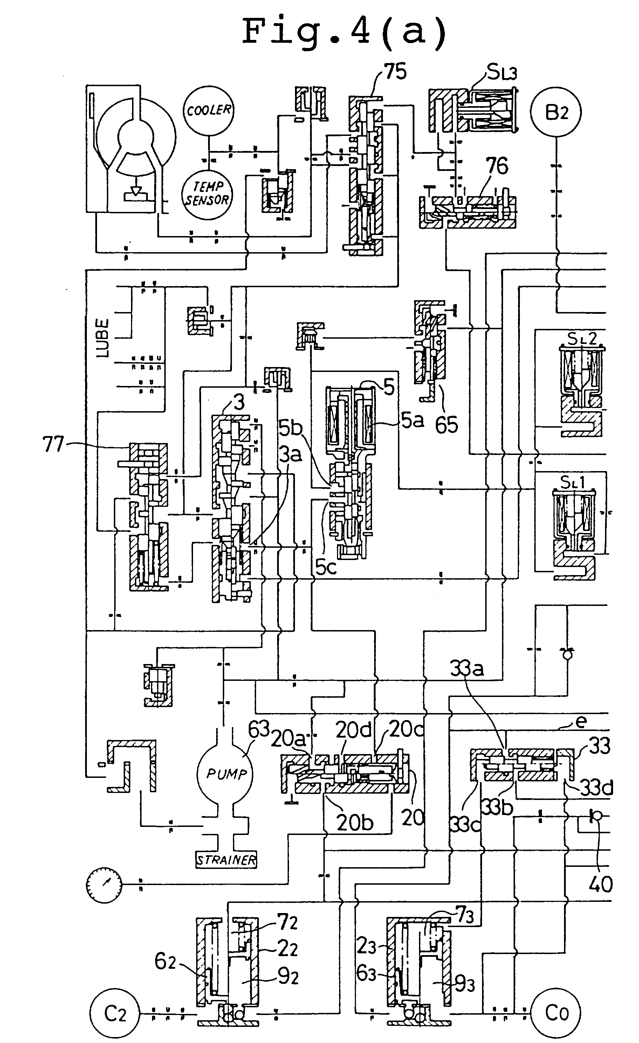

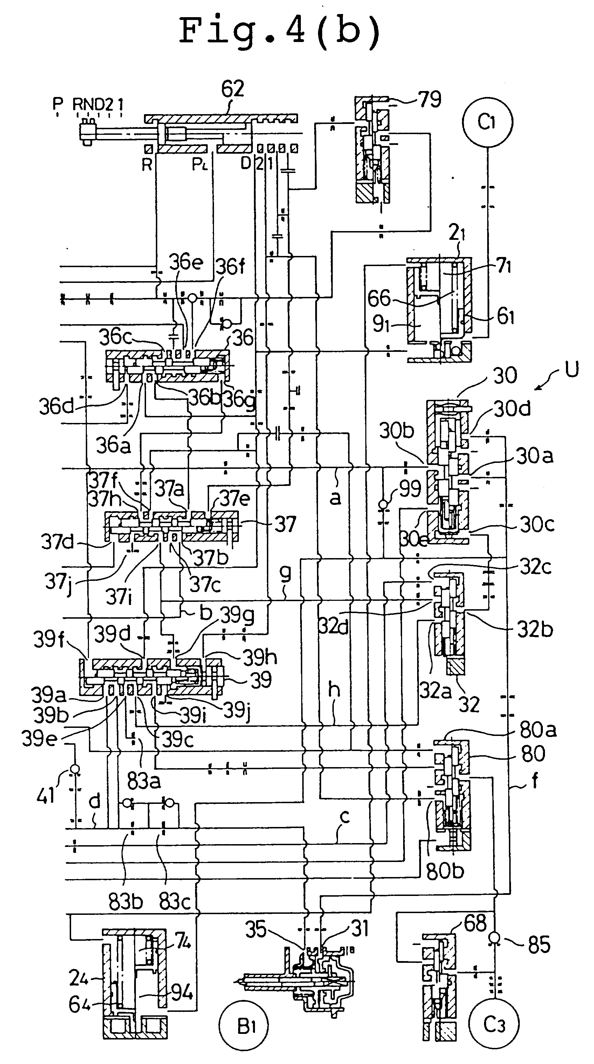

Figs. 4(a) and 4(b) are diagrams showing the hydraulic control system of the automatic transmission of the present invention. In Figs. 4(a) and 4(b), a hydraulic control system U is equipped with hydraulic servos C₁, C₂, C₃ and C₀, and B₁ and B₂ for actuating the clutches C1, C2, C3 and C0 and the brakes B1 and B2, respectively. Of these, the third clutch hydraulic servo C₁, the fourth clutch hydraulic servo C₂, the second clutch hydraulic servo C₀, and the first brake hydraulic servo B₁ are respectively arranged with accumulators 2₁, 2₂, 2₃ and 2₄ in parallel therewith.

Moreover, reference numeral 62 designates a manual valve which has its oil passages switched by the shifting operations of the driver to individual ranges. The manual valve 62 has: its D port communicating with a line pressure passage PL in the D range; its D and 2nd ports in the 2nd range; its D, 2nd and 1st ports in the 1st range; and its R port in the R range.

On the other hand, numeral 3 designates a primary regulator valve which is actuated by a throttle pressure or the oil pressure coming from the R range port to regulate the oil pressure coming from a pump 63 properly to generate the line pressure. Numeral 5 designates a throttle pressure control valve which is controlled by an electric signal based upon the throttle opening to generate a predetermined throttle pressure (Pth).

Said throttle pressure control valve 5 is equipped with a solenoid 5a, which is controlled by the electric signal coming from a not-shown control unit, and an input port 5b and an output port 5c. The throttle pressure Pth coming from the output port 5c is fed to a throttle pressure port 3a of the primary regulator valve 3 and to a feedback port 20c of an accumulator control valve 20.

On the other hand, numeral 65 designates a solenoid modulator valve for modulating the line pressure properly to fed it to the input port 5b of the throttle pressure control valve 5. The accumulator control valve 20 is equipped with not only an input port 20a but also a control port 20b and the feedback port 20c. The oil pressure at the control port 20b is fed to the back pressure chambers 7₁ to 7₄ of the aforementioned accumulators 2₁ to 2₄.

Moreover, these accumulators 2₁ to 2₄ are equipped with pistons 6₁ to 6₄ which have their front faces defining accumulator chambers 9₁ to 9₄ communicating with the individual hydraulic servos and have their back faces defining the back pressure chambers 7₁ to 7₄ having pressure receiving areas equal to those of the accumulator chambers. At the front faces of said pistons 6₁ to 6₄, there are disposed a shorter spring 66 and a longer spring 67, as exemplified in the accumulator 2₁.

Moreover, all of these accumulators are made to have an identical shape and to share common parts.

Incidentally, the first clutch hydraulic servo C₃ is equipped with a modulator valve 68, but the second brake hydraulic servo B₂ is fed either directly with the line pressure or indirectly with the modulator pressure through the modulator valve. Thus, both of these hydraulic servos C₃ and B₂ are equipped with no accumulator.

There are also arranged a 1-2 shift valve 36, a 2-3 shift valve 37 and a 3-4 shift valve 39, of which: the 1-2 shift valve 36 and the 3-4 shift valve 39 are controlled by a second solenoid valve S_{L}2; and the 2-3 shift valve 37 is controlled by a first solenoid valve S_{L}1.

Specifically, the 1-2 shift valve 36 is formed with: a control oil chamber 36d exposed to the control oil pressure coming from the solenoid valve S_{L}2; a line pressure supply port 36a communicating the with D range port; an output port 36b; a drain port 36c; a B₂ port 36e; a low modulator port 36f; and a constraining control oil chamber 36g. The 1-2 shift valve 36a is held in its lower half position at the 2nd, 3rd and 4th speeds and is switched to its upper half position at the 1st speed.

On the other hand, the 2-3 shift valve 37 is formed with: a control oil chamber 37d exposed to the control oil pressure coming from the solenoid valve S_{L}1; an input port communicating with an oil line a leading from the output port 36b of the aforementioned 1-2 shift valve 36; an output port 37b communicating with the second clutch hydraulic servo C₀ via an oil line b; a drain port 37c; a 1st range constraining control oil chamber 37e; a D range line pressure supply port 37f; a port 37h communicating with the constraining control oil chamber 36g of the aforementioned 1-2 shift valve 36; a port 37i; and a drain port 37j. The 2-3 shift valve is held in its lower half position at the 1st and 2nd speeds and is switched to its upper half position at the 3rd and 4th speeds.

On the other hand, the 3-4 shift valve 39 is formed with: a control oil chamber 39f exposed to the control oil pressure coming from the solenoid valve S_{L}2; a C₀ port 39a; a B₁ release port 39b; a drain port 39e; a constraining control oil chamber 39g communicating with the aforementioned port 37i; a 2nd range constraining control oil chamber 39h; a C₃ port 39i; and a drain port 39j. The 3-4 shift valve 39 is held in its lower half position at the 1st, 2nd and 3rd speeds and is switched to its upper half position at the 4th speed.

On the other hand, numeral 30 designates a B₁ modulator valve, which is formed with: a line pressure supply port 30b communicating with the oil line a leading from the output port 36b of the aforementioned 1-2 shift valve 36; a pressure modulation port 30a; a feedback port 30d; a constraining control oil chamber 30c; and a control oil chamber 30e communicating with the pressure control port 20b of the accumulator control valve 20. The B₁ modulator valve 30 reduces the line pressure coming from the line pressure supply port 30b at a predetermined ratio and outputs it to the pressure modulation port 30a, when no constraining control oil pressure is exerted upon the control oil chambers 30c and 30e.

Moreover, numeral 32 designates a B₁ modulator control valve which is formed with: a first input port 32d communicating with an oil line g leading from the port 37i of the aforementioned 2-3 shift valve 37; a second input port 32a communicating with an oil line h leading from the port 39c of the aforementioned 3-4 shift valve 39; and an output port 32b communicating with the constraining control oil chamber 30c of the modulator valve 30. The B₁ modulator control valve 32 has its first input port 32d and output port 32b communicating with each other, when a control oil chamber 32c communicating with the hydraulic servo C₀ via an oil line c is relieved, and its second input port 32a and output port 32b communicating with each other when said control oil chamber 32c is fed with the oil pressure.

On the other hand, a 2-3 timing valve 33, which branches the oil line b providing the communication between the output port 37b of the 2-3 shift valve 37 and the second clutch hydraulic servo C₀, is formed with: an input port 33a communicating with the output port 37b; an output port 33b communicating with the port 39a of the 3-4 shift valve 39; a first control oil chamber 33d communicating with the hydraulic servo C₀: and a second control oil chamber 33c communicating with the pressure control port 20b of the accumulator control valve 20. When the oil pressure of the hydraulic servo C₀ rises to a predetermined level, the 2-3 timing valve 33 has its input port 33a and output port 33b communicating with each other.

In an oil line d providing the communication between the hydraulic servo C₀ and the port 39a, there is disposed a check ball 40 for admitting the flow from the hydraulic servo C₀ to the port 39a. In an oil line e leading from said oil line d to the aforementioned oil line b, there is disposed a check ball 41 for allowing the oil to be discharged from the port 39a to the port 37b.

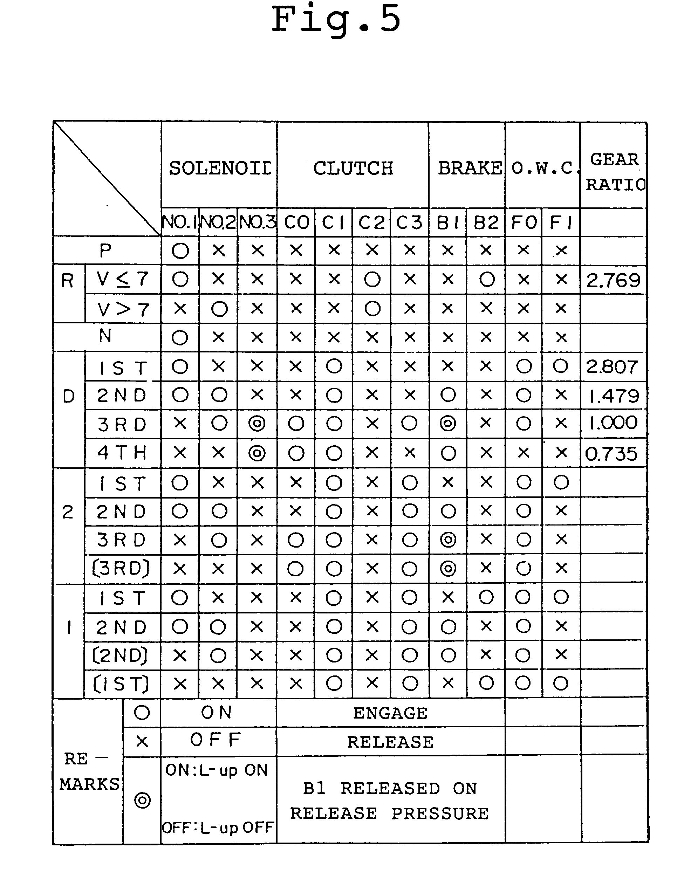

Incidentally, numeral 75 designates a lockup clutch control valve; numeral 76 designates a lockup clutch modulator valve; and characters S_{L}3 designates a lockup clutch controlling solenoid valve. These valves are properly controlled at the gear stages which are indicated at double circles in the operation table of Fig. 5. Moreover, numeral 77 designates a second regulator valve, and numeral 80 designates a C3 timing valve.

Next, the operations of the present embodiment will be described in the following.

At the 1st speed in which the manual valve 62 is shifted to the D range, as shown in Fig. 5, the first solenoid valve S_{L}1 only is ON in the drain state, but the second solenoid valve S_{L}2 is OFF in the supply state.

In this state, the 1-2 shift valve 36 has its control oil chamber 36d fed with the oil pressure and is in its upper half position, and the 2-3 shift valve 37 has its control oil chamber 37d relieved from the oil pressure and is in its lower half position. Moreover, the 3-4 shift valve 39 has its control oil chamber 39f fed with the oil pressure but is constrained in its lower half position because its constraining control oil chamber 39g is fed with the line pressure from the line pressure supply port 37f of the 2-3 shift valve 37.

As a result, the third clutch hydraulic servo C₁ only is fed with the line pressure from the D range port of the manual valve 62, but no other hydraulic servo is supplied with the oil pressure. At this time, the throttle pressure control valve 5 is suitably operated to generate the predetermined throttle pressure Pth on the basis of the signal coming from the control unit. Said throttle pressure Pth is applied to the signal port 20c of the accumulator control valve 20 so that the line pressure supplied to the input port 20a is reduced to a predetermined ratio by the feedback pressure, and this reduced oil pressure is fed from the output port 20b to the back pressure chambers 7₁ to 7₄ of the individual accumulators 2₁ to 2₄.

As a result, in the accumulator 2₁ communicating with the hydraulic servo C₁, the oil pressure of the back pressure chamber 7₁ is properly controlled in accordance with the engagement characteristics of the third clutch C1 by the throttle pressure control valve 5 so that said clutch C1 is smoothly engaged. Simultaneously with this, not only the line pressure by the primary regulator valve 3 but also the pressures in the back pressure chambers 7₂ to 7₄ of the remaining accumulators 2₂ to 2₄ are controlled on the basis of the controls of the throttle pressure control valve 5, but the remaining clutches C0, C2 and C3 and the brakes B1 and B2 are out of engagement and are not influenced in the least.

In the 1st speed state, moreover, in which not only said third clutch C1 but also the first and second one-way clutches F1 and F0 are engaged, the rotations of the input shaft 15 are transmitted to the smaller ring gear R1 through the third clutch C1 and the second one-way clutch F0. Since, in this state, the rotations of the larger ring gear R2 are blocked by the first one-way clutch F1, the carrier CR is drastically decelerated, while allowing the sun gear S to rotate idly, so that the decelerated rotations are extracted from the output gear 13. Moreover, the rotations of this output gear 13 are decelerated by the reduction mechanism 51 and are transmitted to the lefthand and righthand accelerator shafts 59a and 59b by the differential mechanism 52.

In the 2nd speed state, on the other hand, the second solenoid valve S_{L}2 as well as the first solenoid valve S_{L}1 is turned ON. Then, the 2-3 shift valve 37 and the 3-4 shift valve 39 are held in their lower half positions, and the 1-2 shift valve 36 is switched to its lower half position by having its control oil chamber 36d relieved from the oil pressure. In this state, the line pressure of the D range port is applied to the oil line a via the line pressure supply port 36a and the output port 36b and further to the line pressure port 30b of the B₁ modulator valve 30.

On the other hand, the 2-3 shift valve 37 is in the state, in which the D range line pressure supply port 37f and the port 37i are communicating with each other, and the line pressure from said D range line pressure supply port 37f is applied via the port 37i and the oil line g to the first input port 32d of the B₁ modulator control valve 32. In the first and second speed states, said control valve 32 is in its upper half position so that the oil pressure at its input port 32d is applied via the output port 32b to the constraining control oil chamber 30c of the B₁ modulator valve 30.

As a result, this modulator valve 30 is constrained in its lefthand half position, and the line pressure at the aforementioned line pressure supply port 30b is outputted without any change to the pressure modulation port 30a until it is applied by way of an oil line f to the brake engaging oil pressure chamber 31 of the first brake hydraulic servo B₁. As a result, the first brake B1 has its band fastened by the intensive force based upon the line pressure.

At the time of an upshift from the 1st to 2nd speeds, too, the throttle pressure control valve 5 is properly controlled like the aforementioned shift to the D range by the electric signal coming from the control unit, and the line pressure is applied to the back pressure chambers 7₁ to 7₄ of the accumulators 2₁ to 2₄ by said throttle pressure. As a result, the B1 brake hydraulic servo B₁ is properly adjusted in accordance with the engagement characteristics of said brake B1 by having its accumulator 2₄ controlled to a proper back pressure so that the first brake B1 is smoothly engaged.

In this meanwhile, the accumulators 2₁, 2₂ and 2₃ for the remaining clutches C1, C2 and C0 have their back pressures controlled. However, the fourth clutch C2 and the second clutch C0 are in their released states and receive no influence. In the third clutch C1, the hydraulic servo C₁ has its oil pressure changed with the change in the line pressure based upon the throttle pressure change. However, this clutch C1 is already in the engaged static friction state, and the engaging oil pressure is at a level far higher than the torque load of the clutch, so that the clutch C1 is not slipped.

In the 2nd speed state, moreover, in which the first brake B1 and the second one-way clutch F0 as well as the first clutch C1 are engaged, the rotations of the input shaft 15 are transmitted through the third clutch C1 and the second one-way clutch F0 to the smaller ring gear R1, and the sun gear S is stopped by the first brake B1. As a result, the rotations of said smaller ring gear R1 are extracted as the 2nd speed rotations from the carrier CR while allowing the larger ring gear R2 to rotate idly.

Here in this 1st to 2nd speed shift, the first one-way clutch F1 overruns to prevent the shift shocks. which might otherwise be caused by the engagement change.

In the 3rd speed state, moreover, the second solenoid valve S_{L}2 is maintained in its ON state, and the first solenoid valve S_{L}1 is switched to its OFF state.

In this state, the 1-2 shift valve 36 and the 3-4 shift valve 39 are held in their lower half positions, and the 2-3 shift valve 37 is switched to its upper half position by having its control oil chamber 37d fed with the oil pressure. As a result, the line pressure of the oil line a, which is supplied via the 1-2 shift valve ports 36a and 36b, is introduced via the input port 37a and the output port 37b into the oil line b so that it is supplied to the second clutch hydraulic servo C₀ and the accumulator chamber 9₃ of the accumulator 2₃. Moreover, the 2-3 shift valve 37 has the communication of its port 37i switched from the D range line pressure supply port 37f to the drain port 37c so that the oil pressure to the first input port 32d of the B₁ modulator control valve 32 is drained.

Moreover, the oil pressure supplied to the hydraulic servo C₀ is exerted via the oil line c upon the constraining control oil chamber 80b of the C3 timing valve 80 to switch this valve 80 to the righthand half position. As a result, the line pressure from the line pressure port 39d of the 3-4 shift valve 39 is supplied via the port 39i to the input port of the C3 timing valve 80 and further via the output port and the modulator valve 68 to the first clutch hydraulic servo C₃. When the oil pressure of the second clutch hydraulic servo C₀ and its accumulator 2₃ rises to a predetermined level, it is applied to the first control oil chamber 33d of the 2-3 timing valve 33 so that this valve 33 is switched to its upper half position. As a result, the oil pressure from the oil line b is quickly applied to the oil line d via the line pressure supply port 33a and the output port 33b and further to the brake releasing oil pressure chamber 35 of the first brake hydraulic servo B₁ via the ports 39a and 39b.

In this state, moreover, the oil pressure of the hydraulic servo C₀ is exerted via the oil line c upon the control chamber 32c of the B₁ modulator control valve 32 to switch this valve 32 to its lefthand half position. However, the 3-4 shift valve 39 has its port 39c communicating with the drain port 39e, and the B₁ modulator control valve 32 has its second input port 32a as well as its first input port 32d drained. As a result, the B₁ modulator valve 32 is in its pressure modulating state so that its line pressure supply port 30b has its line pressure reduced at a predetermined ratio by the feedback pressure of the feedback port 30d. Thus, said modulator pressure is exerted through the oil line f upon the brake engaging oil pressure chamber 31 of the first brake hydraulic servo B₁.

As a result, in this hydraulic servo B₁, the line pressure acting upon the brake releasing oil pressure chamber 35 overcomes the modulator pressure acting upon the brake engaging oil pressure chamber 31 to release the band brake B1. At this time, the oil pressure of the hydraulic servo C₀ communicating with the accumulator 2₃ is boosted to switch the 2-3 timing valve 33. As a result, the oil pressure is prevented from being quickly supplied to the brake releasing oil pressure chamber 35. Thus, the first brake B1 is prevented from being released prior to the engagement of the second clutch C0, and accordingly the state is prevented from being returned even at an instant to the first speed.

At the shift from the 2nd to 3rd speed, moreover, the throttle pressure control valve 5 is also properly controlled by the electric signal, and the line pressure is controlled according to said throttle pressure by the accumulator control valve 20. This controlled pressure is supplied to the back pressure chambers 7₁ to 7₄ of the accumulators 2₁ to 2₄ and to the second control chamber 33d of the 2-3 timing valve 33.

As a result, the accumulator back pressure control is performed like before on the basis of the throttle pressure control valve 5, and the oil pressure of the hydraulic servo C₀ is controlled to match the engagement characteristics of the second clutch C0 so that said clutch C0 is smoothly engaged. At the same time, the switching timing of the timing valve 3 is properly adjusted to time the engagement of the second clutch C0 and the release of the first brake B1 properly.

Simultaneously with this, the control oil chamber 30e of the B₁ modulator valve 30 is also supplied with the oil pressure from the output port 20b of the accumulator control valve so that its modulator pressure is properly modulated to a higher level. The oil pressure thus modulated is supplied via the oil line f to the brake engaging oil pressure chamber 31 to time the release of said brake B1 properly in accordance with the control of the aforementioned timing valve 33. In the 3rd speed state, on the other hand, in which the first clutch C3 and the second clutch C0 as well as the third clutch C1 are engaged whereas the first brake B1 is released, the rotations of the input shaft 15 are transmitted through the one-way clutch F0 and the first clutch C3 to the smaller ring gear R1 and further through the second clutch C0 to the larger ring gear R2 so that the integral rotations of the planetary gear unit 12 are extracted from the carrier CR to the output gear 13. At this time, the engagement change between the second clutch C0 and the first brake B1 occurs. However, no shift shock will take place because the proper timing is taken, as described above, and because the shifts via other gear stage are blocked. Simultaneously with this, moreover, the first clutch C3 is also engaged, and this engagement timing may be slow because said clutch C3 is in parallel with the second one-way clutch F0. Next, in the 4th speed state, the first solenoid valve S_{L}1 is OFF, and the second solenoid valve S_{L2} is switched OFF. In this state, the 2-3 shift valve 37 is held in its upper half position, and the 3-4 shift valve 39 is switched to its upper half position by having its control chamber 39f fed with the control oil pressure. On the other hand, the 1-2 shift valve 36 has its control oil chamber 36d fed with the control oil pressure but its constraining control oil chamber 36g fed with the line pressure of the line pressure supply port 37f of the 2-3 shift valve 37 via the port 37h, so that the 1-2 shift valve 36 is held in its lower half position. As a result, the 3-4 shift valve 39 has its B₁ relief port 39b communicating with the drain port 39e so that the brake engaging oil pressure chamber 31 of the first brake hydraulic servo B₁ is drained. At the aforementioned 3rd speed, since the oil pressure is supplied to the second clutch hydraulic servo C₀, the oil pressure is supplied via the oil line c to the control oil chamber 32c of the B₁ modulator control valve 32 so that this valve 32 is switched to its lower half position in which the second input port 32a and the output port 32b are communicating with each-other. If, in this state, the 3-4 shift valve 39 is switched at the 4th speed to have its line pressure supply port 39d communicating with the port 39c, the line pressure is fed via the ports 39d and 39c and the ports 32a and 32b of the B₁ modulator control valve to the constraining control oil chamber 30c of the B₁ modulator valve 30 so that this modulator valve 30 is switched to the line pressure supply state in which the line pressure port 30b and the pressure modulation port 30a are communicating with each other.

As a result, the line pressure is introduced as it is to the oil line f via the ports 30b and 30a so that the oil pressure supplied to the brake engaging oil pressure chamber 31 of the first brake hydraulic servo B₁ is switched from the modulator pressure to the line pressure.

At this time, like before, the shift can be smoothed by controlling the oil pressure to be supplied to the back pressure chamber 7₄ of the accumulator 2₄ on the basis of the electric control of the throttle pressure control valve 5. Despite of this fact, however, the engagement of the first brake B1 is controlled by adjusting the drain oil pressure from the brake releasing oil pressure chamber 35 by means of orifices 83a, 83b, 83c and so on.

Since the 3-4 shift valve 39 has its C3 timing port 39i communicating with the drain port 39j, the oil pressure of the first hydraulic servo C₃ is drained through a check ball 85 and the C3 timing valve 80 and via the ports 39i and 39j of the 3-4 shift valve 39.

Incidentally, in the 4th speed state, the throttle pressure control valve 5 is controlled to a rather high level by the electric signal coming from the control unit, and the accumulator back pressure or the output pressure of the accumulator control valve 20 is also set to a rather high level.

In the 4th speed state, the third clutch C1 and the second clutch C0 are in their engaged states, and the first brake B1 is switched to its engaged state whereas the first clutch C3 is switched to its released state. In this 4th speed state, the rotations of the input shaft 15 are transmitted through the second clutch C0 to the larger ring gear R2. At the same time, the sun gear S is stopped by the first brake B1 so that the rotations of said larger ring gear R2 rotates the carrier CR at a high speed while rotating the ring gear R1 idly. The rotations of the carrier CR are transmitted to the output gear 13. At this time, the first brake B1 is engaged, and the first clutch C3 is released. Even if, however, the first clutch C3 is prematurely released, the 3rd speed state is maintained by the second one-way clutch F0. As a result, the shift shocks, which might otherwise be caused by the engagement change, can be prevented by delaying the engagement of the first brake B1 by means of the orifices 83a to 83c.

At the downshift from the 4th to 3rd speeds, on the other hand, the 3-4 shift valve 39 is switched to its lower half position, as has been described hereinbefore, the oil pressure of the oil line b is supplied via the ports 39a and 39b to the brake releasing oil pressure chamber 35 of the first brake hydraulic servo B₁, and the line pressure of the line pressure supply port 39d is supplied via the port 39i and through the C3 timing valve 80 and the C₃ modulator valve 68 to the first clutch hydraulic servo C₃. At this time, the release oil pressure to be supplied to the brake releasing oil pressure chamber 35 of the hydraulic servo B₁ is controlled by means of the orifices 83b and 83c, and the second one-way clutch F0 is switched from the overrun to the engagement, so that the shift can be smoothly effected. At the downshift from the 3rd to 2nd speed, moreover, the 2-3 shift valve 37 is switched to its lower half position, as has been described hereinbefore, to have its C₀ port 37b and drain port 37c communicating with each other. Then, the oil pressure in the brake releasing oil pressure chamber 35 of the hydraulic servo B₁ is drained at first from the drain port 37c via the ports 39b and 39a, the oil line d, the oil line e, the oil line b and the port 37b, and the oil pressure of the second clutch hydraulic servo C₀ is drained together with the oil pressure of the accumulator chamber 9₃ of the accumulator 2₃ from the drain port 37c via the oil line b and the port 37b. As a result, the release of the second clutch C0 is delayed relative to the engagement of the first brake B1 thereby to prevent the shifting operations from the 3rd through 1st to 2nd speeds, namely, the shift which will pass the 1st speed state having both the second clutch C0 and the first brake B1 released.

Incidentally, at the downshift from the 3rd to 2nd speeds, the C3 timing valve 80 is switched to its lefthand half position by having its constraining control oil chamber 80b relieved from the oil pressure based upon the hydraulic servo C₀, so that the oil pressure of the hydraulic servo C₃ is drained via the check ball 85 from the drain port of the C3 timing valve 80.

At the downshift from the 2nd to 1st speeds, moreover, the 1-2 shift valve 36 is switched to its upper half position to have its output port 36b communicating with its drain port 36c. As a result, the oil pressure of the brake engaging oil pressure chamber 31 of the first brake hydraulic servo B₁ is discharged to the drain port 36c from the oil line f, the ports 30a and 30b of the B₁ modulator valve 30, the check ball 99, the oil line a and the port 36b.

At the kickdown from the 4th to 2nd speeds, on the other hand, the 3-4 shift valve 39 is switched to its lower half position, and the 2-3 shift valve 37 is also switched to its lower half position. As a result, the oil pressure of the second clutch hydraulic servo C₀ is discharged from the drain port 37c via the oil line b and the port 37b, and the oil pressure of the brake releasing oil pressure chamber 35 of the first brake hydraulic servo B₁ is also discharged from the drain port 37c via the ports 39a and 39b, the oil line d, the check ball 41, the oil lines e and a and the port 37b.

At this time, the B₁ modulator control valve 32 is switched to its righthand half position by having its control oil chamber 32c relieved from its oil pressure based upon the hydraulic servo C₀. At the same time, the B₁ modulator control valve 32 has its input port 32a drained to relieve the constraining pressure of the constraining control oil chamber 30c of the B₁ modulator valve 30 so that this valve 30 generates the modulator valve pressure. However, the B₁ modulator valve 30 is constrained in its line pressure supplied state because the line pressure is instantly supplied to the port 32d of the control valve 32 via the port 37i of the 2-3 shift valve 37 and further to the constraining control oil chamber 30c via the port 32b.

As a result, the first brake B1 is maintained in its engaged state without passing any release so that the downshift is quickly and smoothly effected by the single operation. If, on the other hand, the manual valve 62 is shifted to the R range, the line pressure is supplied from the R range port to the fourth clutch hydraulic servo C₂ and its accumulator 2₂. At this time, like before, the throttle pressure control valve 5 is properly controlled to the proper level by the electric signal coming from the control unit, and the oil pressure having acted upon the accumulator control valve 20 and dropped from the line pressure is supplied to the back pressure chambers 7₁ to 7₄ of the accumulators 2₁ to 2₄ to control the back pressure of the accumulator 2₂. As a result, the oil pressure of the hydraulic servo C₂ is controlled to correspond to the engagement characteristics of the fourth clutch C2 so that the shifts from the N to R ranges or from the D to R ranges can be smoothed. In this reverse (R) range, that is, in case the vehicle is running at a predetermined low speed, e.g., 7 Km/H or substantially in the halted state, the 1-2 shift valve 36 is in its upper half position, and the line pressure from the R range port is supplied to the second brake hydraulic servo B₂ through the two-way check valve and via the ports 36f and 36e. In the reverse state, moreover, in which the fourth clutch C2 and the second brake B2 are engaged, the rotations of the input shaft 15 are transmitted through the second fourth C2 to the sun gear S. Since, moreover, the larger ring gear R2 is stopped by the second brake B2, the rotations of said sun gear S are reversed and transmitted to the carrier CR, while rotating the smaller ring gear R1 idly, so that these reverse rotations are extracted from the output gear 13.

In the reverse range, moreover, in case the vehicle is coasting at a predetermined speed or more, the second solenoid valve S_{L}2 is turned ON to switch the 1-2 shift valve 36 to its lower half position. In this state, no oil pressure is supplied to the second brake hydraulic servo B₂ so that the aforementioned reverse state is not caused.

If the manual valve 62 is shifted to the 2nd range, on the other hand, the line pressure of the 2nd range port is supplied to the constraining control oil chamber 39h of the 3-4 shift valve 39 so that this valve 39 is blocked from coming into its upper half position, i.e., the 4th speed position.

Moreover, the line pressure of the 2nd range port is supplied to the constraining control oil chamber 80b of the C3 timing valve 80 to hold this valve 80 in its righthand half position so that the first clutch hydraulic servo C₃ is always supplied with the oil pressure at the 1st, 2nd and 3rd speeds.

As a result, the input shaft 15 and the smaller ring gear R1 are connected through the first multi-disc clutch C3 so that the braking by the engine is established by eliminating the coasting of the vehicle, which might otherwise be caused by the overrun of the second one-way clutch F0.

If, moreover, the manual valve 62 is shifted to the 1st range, the line pressure of the 1st range port is supplied to the constraining control oil chamber 37e of the 2-3 shift valve 37 so that this valve 37 is blocked from coming into its upper half position, i.e., the 3rd and 4th speed positions. The line pressure of the 1st range port is reduced by a low modulator valve 79. This modulated pressure is supplied through the two-way check valve to the port 36f of the 1-2 shift valve 36 and further to the second brake hydraulic servo B₂ at the 1st speed.

Incidentally, the embodiment thus far described uses the B₁ modulator control valve 32, which is not always indispensable.

In the automatic transmission thus constructed, the second multi-disc clutch C0 and the first multi-disc clutch C3 are arranged adjacent to each other and have their outer cylinder, spring and spring retainer shared to shorten the axial size.

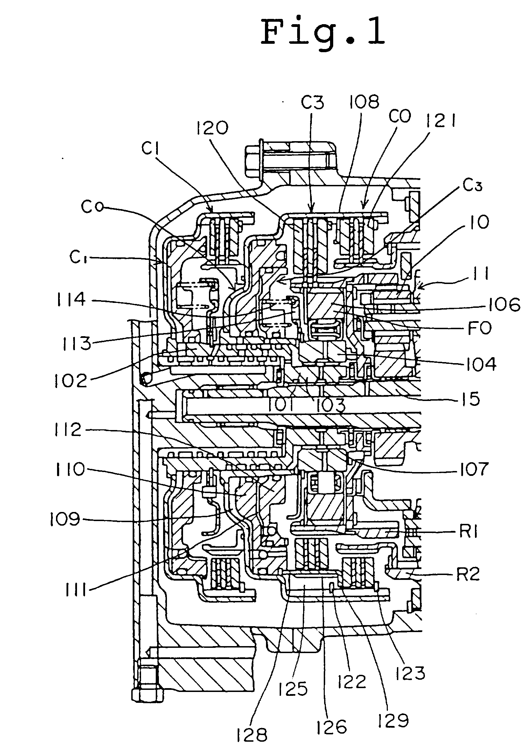

Fig. 1 is an enlarged section showing the second multi-disc clutch C0 and the first multi-disc clutch C3.

In Fig 1 reference numeral 101 designates an inner cylinder of the third clutch C1, which is splined to the input shaft 15 and formed with a larger-diameter portion 102 and a smaller-diameter portion 103. This latter portion 103 supports an inner cylinder 104, which forms the inner race of the one-way clutch F0, rotatably through a bushing 107. Said one-way clutch F0 has its outer race 106 splined to the ring gear R1.

The aforementioned inner cylinder 104 is jointed to an outer cylinder 108 to constitute the aforementioned connecting member 16 and form a first annular cylinder chamber 109 together.

In this first annular cylinder chamber 109, there is slidably arranged a first annular piston 110 to form the second multi-disc clutch C0 hydraulic servo C₀.

This first annular piston 110 has a dish-shaped section to form a second annular cylinder chamber 111 together with the aforementioned inner cylinder 104. In this second annular cylinder chamber 111, moreover, there is slidably arranged a second annular piston 112 to form the first multi-disc clutch C3 hydraulic servo C₃.

In the aforementioned inner cylinder 104, on the other hand, there is erected a spring retainer 113 which faces the second annular piston 112. A spring is interposed between these spring retainer 113 and second annular piston 112.

To the aforementioned outer cylinder 108, on the other hand, there are splined first multi-disc clutch thin disc 120 and a second multi-disc clutch thin disc 121, which have their axial movements restricted by snap rings 122 and 123, respectively.

Thus, the aforementioned first annular piston 110 is axially moved, when the hydraulic servo C₀ for the second multi-disc clutch C0 is supplied with the oil, to bring the thin disc 121 of the second multi-disc clutch into and out of engagement. Likewise, the aforementioned second annular piston 112 is axially moved, when the hydraulic servo C₃ for he first multi-disc clutch C3 is supplied with the oil, to bring the thin disc 120 of the first multi-disc clutch into and out of engagement.

Here, the first multi-disc clutch C3 and the second multi-disc clutch C0 have to operate independently of each other so that they may not interfere with each other. For this necessity, the aforementioned first clutch thin disc 120 is formed with grooves 125 which are arranged at a circumferentially predetermined spacing to extend apply tubes 126 therethrough. These apply tubes 126 are arranged between the aforementioned first annular piston 110 and the second clutch thin disc 121 to bring this disc 121 into and out of engagement in accordance with the axial movement of the first annular piston 110.

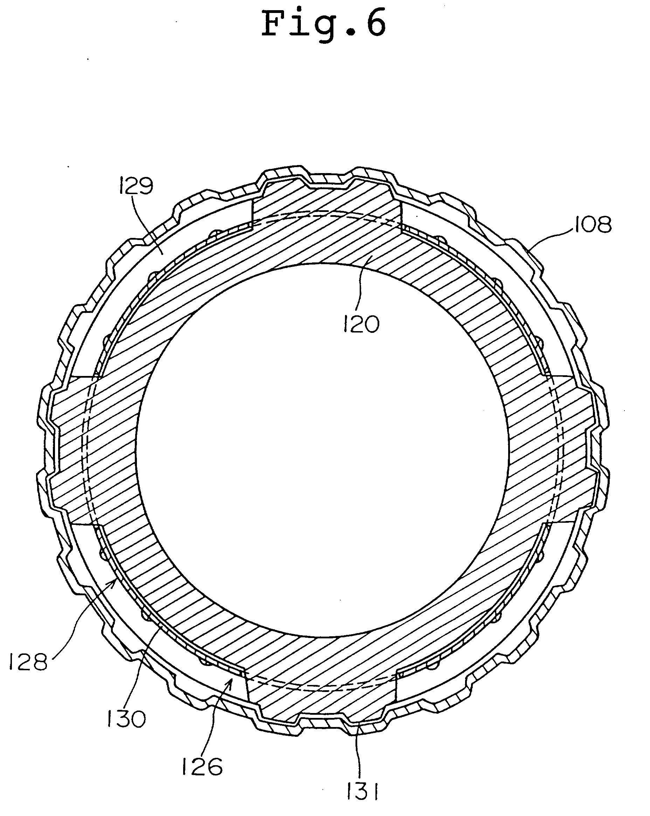

Fig. 6 is a section showing the arrangement state of the apply tubes. In Fig. 6, the numeral 108 designates the outer cylinder, and the numeral 126 designates one of the apply tubes. This apply tube 126 is formed with a sleeve portion 128 and a flange portion 129 formed at one end of said sleeve portion 128 to constitute a pressure portion facing the aforementioned thin disc 121 (as shown in Fig. 1).

The aforementioned sleeve portion 128 is circumferentially cut off at a plurality of positions so that it is formed into a comb having a plurality of teeth 130. These teeth 130 extend through the aforementioned grooves 125 to transmit the motions of the first annular piston 110 to the thin disc 121. Incidentally, a plurality of rotation suppressing ridges 131 are formed to position the aforementioned apply tubes 126 in the outer cylinder 108 thereby to suppress their circumferential rotations.

The present invention can be applied to all types of automatic transmissions, especially an automatic transmission which is small-sized for the FF automobiles.

## Claims

1. An automatic transmission comprising:
an outer cylinder (108);
an inner cylinder (104) fixed in said outer cylinder (108) for forming a first annular cylindrical chamber (109);
a first annular piston (110) slidably arranged in said first annular chamber (109) and forming a second annular chamber (111) between itself and said inner cylinder (104);
a second annular piston (112) slidably arranged in said second annular chamber (111);
first and second multi-disc clutches (C3, C0, respectively) arranged axially in tandem in said outer cylinder (108), said first multi-disc clutch (C3) being adapted to be engaged or released by said second annular piston (112) and having a peripheral edge portion with axially extending grooves (125);
an apply tube (126) extending between said first annular piston (110) and said second multi-disc clutch (C0) adapted to be engaged or released by said first annular piston (110), said apply tube (126) having a plurality of teeth (130) extending through said grooves (125) for engaging said second multi-disc clutch (C0); and
first and second snap rings (122, 123, respectively) restricting the axial movements of said first and second multi-disc clutches (C3, C0, respectively),
wherein the second snap ring (123) restricting the axial movement of said second multi-disc clutch (C0) is fixed at said outer cylinder (108)
**characterized in that**
the first snap ring (122) is fixed at said outer cylinder (108), so that said first and second multi-disc clutches (C3, C0, respectively) are adapted to be engaged or released independently of each other.

2. An automatic transmission according to claim 1, further comprising:
a casing;
an input shaft (15);
planetary gearing (12) mounted within said casing and including:
a single planetary gear unit (10) having a first sun gear (S1), a first ring gear (R1), a first pinion (P1) meshing with said first sun gear and said first ring gear, and a common carrier (CR) supporting said first pinion; and
a dual planetary gear unit (11) having a second sun gear (S2) connected to said first sun gear (S1), a second ring gear (R2), a second pinion (P1') meshing with said second sun gear (S2) and a third pinion (P2) meshing with said second ring gear (R2) and said second pinion (P1'), said common carrier (CR) supporting said second and third pinions (P1', P2);
a connecting member (16) provided between said input shaft (15) and said planetary gearing (12) selectively connecting said input shaft (15) with said planetary gearing (12);
a third clutch (C1) selectively connecting said input shaft (15) with said connecting member (16);
a fourth clutch (C2) selectively connecting said input shaft (15) with said first and second sun gears (S1, S2);
a first brake (B1) selectively connecting said first and second sun gears (S1, S2) with said casing;
a second brake (B2) selectively connecting said second ring gear (R2) with said casing;
a first one-way clutch (FO) selectively connecting said connecting member (16) with said first ring gear (R1), thereby connecting said input shaft (15) with said first ring gear (Rl) through said connecting member (16) and said third clutch (C1); and
an output member (13) connected to said common carrier (CR);
wherein said first multi-disc clutch (C3) is provided in parallel with said first one-way clutch (FO) for selectively connecting said connecting member (16) with said first ring gear (R1), thereby connecting said input shaft (15) with said first ring gear (R1) through said connecting member (16) and said third clutch (C1), and
wherein said second multi-disc clutch (CO) selectively connects said connecting member (16) with said second ring gear (R2), thereby connecting said second ring gear (R2) with said input shaft (15) through said third clutch (C1) and said connecting member (16).

3. An automatic transmission as set forth in claim 1 or 2, further comprising: a second one-way clutch (Fl) for selectively connecting said second ring gear (R2) with said casing.

4. An automatic transmission as set forth in claim 1, 2 or 3, wherein said planetary gearing (12) is located between said third clutch (C1) and said fourth clutch (C2); wherein said fourth clutch (C2) is adjacent to said first brake (B1), and wherein said output member (13) carries an output gear (13), said output gear (13) being located between said planetary gearing (12) and said fourth clutch (C2).

5. An automatic transmission as set forth in any one of claims 1 to 4, wherein said first multi-disc clutch (C3) is adjacent to said first ring gear (R1).

## Patentansprüche

1. Automatik-Getriebe mit:
einem Außenzylinder (108);
einem im Außenzylinder (108) befestigten Innenzylinder (104), um eine erste ringförmige, zylinderförmige Kammer (109) zu bilden;
einem in der ersten ringförmigen Kammer (109) verschiebbar angeordneten ersten ringförmigen Kolben (110), um eine zweite ringförmige Kammer (111) zwischen dem Kolben und dem Innenzylinder (104) zu bilden;
einem in der zweiten ringförmigen Kammer (111) verschiebbar angeordneten zweiten ringförmigen Kolben (112);
einer ersten und einer zweiten Mehrscheibenkupplung (C3, C0), die im Außenzylinder (108) axial hintereinander angeordnet sind, wobei die erste Mehrscheibenkupplung (C3) durch den zweiten ringförmigen Kolben (112) betätigt oder gelöst wird und einen Umfangsrandabschnitt mit sich axial erstreckenden Nuten (125) aufweist;
einem sich zwischen dem ersten ringförmigen Kolben (110) und der zweiten Mehrscheibenkupplung (C0), die durch den ersten ringförmigen Kolben (110) betätigt oder gelöst werden kann, erstreckenden Betätigungsrohr (126), wobei das Betätigungsrohr (126) mehrere sich durch die Nuten (125) erstreckende Zähne (130) aufweist, um die zweite Mehrscheibenkupplung (C0) in Eingriff zu bringen; und
einem ersten und einem zweiten Sprengring (122, 123) zum Begrenzen der axialen Bewegungen der ersten und der zweiten Mehrscheibenkupplung (C3, C0);
wobei der zweite Sprengring (123), der die axiale Bewegung der zweiten Mehrscheibenkupplung (C0) begrenzt, am Außenzylinder (108) befestigt ist;
**dadurch gekennzeichnet, daß**
der erste Sprengring (122) am Außenzylinder (108) derart befestigt ist, daß die erste und die zweite Mehrscheibenkupplung (C3, C0) unabhängig voneinander betätigt oder gelöst werden können.

2. Automatik-Getriebe nach Anspruch 1, ferner mit:
einem Gehäuse;
einer Eingangswelle (15)
einem im Gehäuse angeordneten Planetengetriebe (12) mit:
einer ersten Planetengetriebeeinheit (10) mit einem ersten Sonnenrad (S1), einem ersten Hohlrad (R1), einem mit dem ersten Sonnenrad und dem ersten Hohlrad kämmenden ersten Ritzel (P1), einem gemeinsamen Träger (CR), der das erste Ritzel hält; und
einer Doppelplanetengetriebeeinheit (11) mit einem mit dem ersten Sonnenrad (S1) verbundenen zweiten Sonnenrad (S2), einem zweiten Hohlrad (R2), einem mit dem zweiten Sonnenrad (S2) kämmenden zweiten Ritzel (P1') und einem mit dem zweiten Hohlrad (R2) und dem zweiten Ritzel (P1') kämmenden dritten Ritzel (P2), wobei der gemeinsame Träger (CR) das zweite und das dritte Ritzel (P1', P2) hält;
einem zwischen der Eingangswelle (15) und dem Planetengetriebe (12) angeordneten Verbindungselement (16), durch das die Eingangswelle (15) selektiv mit dem Planetengetriebe (12) verbunden wird;
einer dritten Kupplung (C1), durch die die Eingangswelle (15) selektiv mit dem Verbindungselement (16) verbunden wird;
einer vierten Kupplung (C2), durch die die Eingangswelle (15) selektiv mit dem ersten und mit dem zweiten Sonnenrad (S1, S2) verbunden wird;
einer ersten Bremse (B1), durch die das erste und das zweite Sonnenrad (S1, S2) selektiv mit dem Gehäuse verbunden werden;
einer zweiten Bremse (B2), durch die das zweite Hohlrad (R2) selektiv mit dem Gehäuse verbunden wird;
einer ersten Einwegkupplung (F0), durch die das Verbindungselement (16) selektiv mit dem ersten Hohlrad (R1) verbunden wird, wodurch die Eingangswelle (15) über das Verbindungselement (16) und die dritte Kupplung (C1) mit dem ersten Hohlrad (R1) verbunden wird; und
einem mit dem gemeinsamen Träger (CR) verbundenen Abtriebselement (13);
wobei die erste Mehrscheibenkupplung (C3) parallel zur ersten Einwegkupplung (F0) angeordnet ist, um das Verbindungselement (16) selektiv mit dem ersten Hohlrad (R1) zu verbinden, wodurch die Eingangswelle (15) über das Verbindungselement (16) und die dritte Kupplung (C1) mit dem ersten Hohlrad (R1) verbunden wird; und
wobei durch die zweite Mehrscheibenkupplung (C0) das Verbindungselement (16) selektiv mit dem zweiten Hohlrad (R2) verbunden wird, wodurch das zweite Hohlrad (R2) über die dritte Kupplung (C1) und das Verbindungselement (16) mit der Eingangswelle (15) verbunden wird.

3. Automatik-Getriebe nach Anspruch 1 oder 2, ferner mit:
einer zweiten Einwegkupplung (F1) zum selektiven Verbinden des zweiten Hohlrads (R2) mit dem Gehäuse.

4. Automatik-Getriebe nach Anspruch 1, 2 oder 3, wobei das Planetengetriebe (12) zwischen der dritten Kupplung (C1) und der vierten Kupplung (C2) angeordnet ist;
wobei die vierte Kupplung (C2) neben der ersten Bremse (B1) angeordnet ist, und
wobei das Abtriebselement (13) ein zwischen dem Planetengetriebe (12) und der vierten Kupplung (C2) angeordnetes Abtriebszahnrad (13) trägt.

5. Automatik-Getriebe nach einem der Ansprüche 1 bis 4, wobei die erste Mehrscheibenkupplung (C3) neben dem ersten Hohlrad (R1) angeordnet ist.

## Revendications

1. Transmission automatique comprenant:
un cylindre extérieur (108);
un cylindre intérieur (104) fixé dans ledit cylindre extérieur (108) pour former une première chambre cylindrique annulaire (109);
un premier piston annulaire (110) disposé de façon coulissante dans ladite première chambre annulaire (109) et formant une seconde chambre annulaire (111) entre lui-même et ledit cylindre intérieur (104);
un second piston annulaire (112) disposé de façon coulissante dans ladite seconde chambre annulaire (111);
des premier et second embrayages multidisques (C3, C0, respectivement) disposés axialement en tandem dans ledit cylindre extérieur (108), ledit premier embrayage multidisque (C3) étant adapté pour être enclenché ou déclenché par ledit second piston annulaire (112) et comportant une partie de bord périphérique pourvue de rainures (125) s'étendant axialement;
un tube (126) d'application de pression s'étendant entre ledit premier piston annulaire (110) et ledit second embrayage multidisque (CO) adapté pour être enclenché ou déclenché par ledit premier piston annulaire (110), ledit tube (126) d'application de pression comportant une pluralité de dents (130) s'étendant à travers lesdites rainures (125) pour enclencher ledit second embrayage multidisque (CO); et
des première et seconde bagues élastiques (122, 123, respectivement) limitant les déplacements axiaux desdits premier et second embrayages multidisques (C3, C0, respectivement),
la seconde bague élastique (123), qui limite le déplacement axial dudit second embrayage multidisque (CO), étant fixée audit cylindre extérieur (108)
caractérisée en ce que
la première bague élastique (122) est fixée audit cylindre extérieur (108), de sorte que lesdits premier et second embrayages multidisques (C3, C0, respectivement) sont adaptés pour être enclenchés ou déclenchés indépendamment l'un de l'autre.

2. Transmission automatique selon la revendication 1, comprenant en outre:
un carter;
un arbre d'entrée (15);
un train épicycloidal (12) monté à l'intérieur dudit carter et comprenant:
un train planétaire simple (10) comportant un premier pignon solaire (S1), une première couronne dentée (R1), un premier satellite (P1) engrènant avec ledit premier pignon solaire et ladite première couronne dentée, et un porte-satellites commun (CR) supportant ledit premier satellite;
et
un train planétaire double (11) comportant un second pignon solaire (S2) couplé audit premier pignon solaire (S1), une seconde couronne dentée (R2), un second satellite (P1') engrènant avec ledit second pignon solaire (S2) et un troisième satellite (P2) engrènant avec ladite seconde couronne dentée (R2) et ledit second satellite (P1'), ledit porte-satellites commun (CR) supportant lesdits second et troisième satellites (P1', P2);
un élément de couplage (16) disposé entre ledit arbre d'entrée (15) et ledit train épicycloïdal (12) couplant sélectivement ledit arbre d'entrée (15) audit train épicycloïdal (12);
un troisième embrayage (C1) couplant sélectivement ledit arbre d'entrée (15) audit élément d'accouplement (16);
un quatrième embrayage (C2) couplant sélectivement ledit arbre d'entrée (15) auxdits premier et second pignons solaires (S1, S2);
un premier frein (B1) couplant sélectivement lesdites premier et second pignons solaires (S1, S2) audit carter;
un second frein (B2) couplant sélectivement ladite seconde couronne dentée (R2) audit carter;
un premier embrayage unidirectionnel (FO) couplant sélectivement ledit élément de couplage (16) à ladite première couronne dentée (R1), en couplant ainsi ledit arbre d'entrée (15) à ladite première couronne dentée (R1) par l'intermédiaire dudit élément de couplage (16) et dudit troisième embrayage (C1); et
un élément de sortie (13) couplé audit support commun (CR);
ledit premier embrayage multidisque (C3) étant disposé en parallèle avec ledit premier embrayage unidirectionnel (FO) pour coupler sélectivement ledit élément de couplage (16) à ladite première couronne dentée (R1), en couplant ainsi ledit arbre d'entrée (15) à ladite couronne dentée (R1) par l'intermédiaire dudit élément de couplage (16) et dudit troisième embrayage (C1), et
ledit second embrayage multidisque (C0) couplant sélectivement ledit élément de couplage (16) à ladite seconde couronne dentée (R2), en couplant ainsi ladite seconde couronne dentée (R2) audit arbre d'entrée (15) par l'intermédiaire dudit troisième embrayage (C1) et dudit élément de couplage (16).

3. Transmission automatique selon la revendication 1 ou 2, comprenant en outre :
un second embrayage unidirectionnel (F1) pour coupler sélectivement ladite seconde couronne dentée (R2) audit carter.

4. Transmission automatique selon la revendication 1, 2 ou 3, dans lequel ledit train épicyloïdal (12) est placé entre ledit troisième embrayage (C1) et ledit quatrième embrayage (C2);
ledit quatrième embrayage (C2) étant adjacent audit premier frein (B1), et
ledit élément de sortie (13) supporte un pignon de sortie (13), ledit pignon de sortie (13) étant placé entre ledit train épicyloïdal (12) et ledit quatrième embrayage (C2).

5. Transmission automatique selon l'une quelconque des revendications 1 à 4, dans lequel ledit premier embrayage multidisque (C3) est adjacent à ladite première couronne dentée (R1).
